# EUROPEAN PATENT APPLICATION

(11) **EP 2 983 365 A1**
(43) Date of publication of application: **10.02.2016**
(21) Application number: 13883015.3
(22) Date of filing: 18.10.2013
(51) Int. Cl.: H04N 19/50

(54) **IMAGE PREDICTION CODING METHOD AND IMAGE CODER**

(30) Priority: 26.04.2013 CN 201310149199
(71) Applicant: Huawei Technologies Co., Ltd., Longgang District Shenzhen, Guangdong 518129 (CN)
(72) Inventor: WANG, Pulin, Shenzhen Guangdong 518129 (CN); LI, Junhua, Shenzhen Guangdong 518129 (CN)
(74) Representative: Pfenning, Meinig & Partner mbB
(86) International application number: PCT/CN2013/085426
(87) International publication number: WO 2014/173092

(57) **Abstract**

The present invention discloses an image predictive coding method and an encoder, to prevent an error occurring in a Tile from spreading to an entire frame of image. In the present invention, during a process of encoding an LCU in a Tile of a current frame, a Tile of the current frame is determined first, in which the to-be-predictive-coded LCU or a PU is located, then, a Tile of a reference frame is determined in the reference frame of the current frame, where a position of the Tile of the reference frame is the same as a position of the Tile of the current frame in the current frame, when a PU of the LCU is predicted, a reference pixel is selected from the determined Tile of the reference frame, and when a PMV of the PU included in the LCU is determined, the PMV of the PU is selected from the determined Tile of the reference frame, which can prevent an error occurring in a Tile from spreading to an entire frame of image, thereby improving accuracy of image coding.

## Description

This application claims priority to Chinese Patent Application No. 201310149199.X, filed with the Chinese Patent Office on April 16, 2013, and entitled "IMAGE PREDICTIVE CODING METHOD AND IMAGE ENCODER", which is incorporated herein by reference in its entirety.

### TECHNICAL FIELD

The present invention relates to the field of image processing technologies, and in particular, to an image predictive coding method and an image encoder.

### BACKGROUND

As a current mainstream video coding standard, the HEVC (High Efficiency Video Codec)/H.265 is a mixed video coding standard based on a combination of transformation and prediction, and introduces many optimization ideas for parallel operations, to be applicable to a chip with a high parallel operation level, where a Tile (code block) technology is a typical technology used to implement a parallel operation.

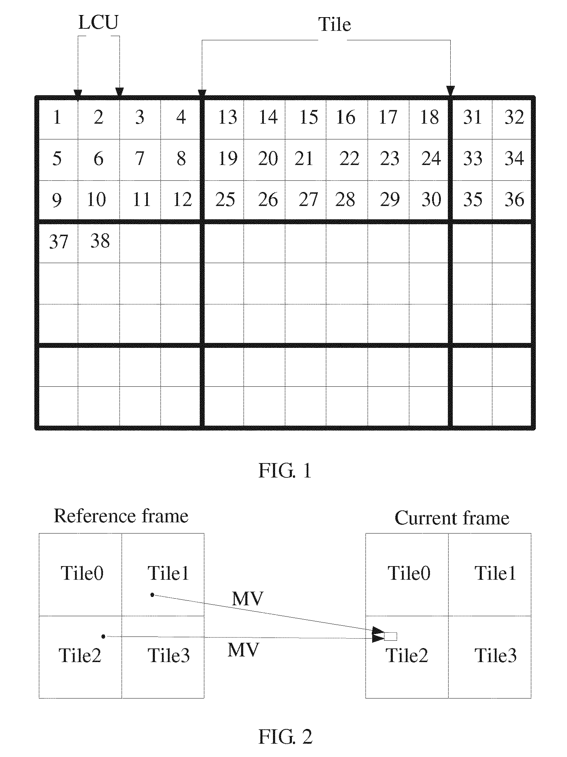

The Tile technology is to divide each frame of image into several rectangular areas, and each rectangular area obtained through the division is one Tile, as shown in FIG. 1. In FIG. 1, each Tile includes LCUs (Largest Coding Unit, largest coding unit) whose quantity is an integer. When image coding is performed in the unit of LCUs, each LCU in the Tile is separately encoded. Because each LCU in each Tile is independently encoded, each Tile is a set of independent coding units, and a spatial dependence relationship is broken. Therefore, Tiles obtained through division in each frame are mutually independent, and several Tiles may be encoded at the same time, which implements parallel processing.

In the prior art, when LCUs are encoded, at least one PU (Predicting Unit, predicting unit) included in each LCU needs to be predicted, and each PU is an image block including several pixels. When a PU is predicted, a reference pixel needs to be determined, and the PU is predicted by using an MV (Moving Vector, moving vector) of the reference pixel. However, an existing predictive coding method includes an intra-frame predictive coding method and an inter-frame predictive coding method. When intra-frame predictive coding is performed, due to independence between Tiles in a frame, when a PU is predicted, a selected reference pixel is only related to a Tile in which a current to-be-predictive-coded LCU is located, and is not related to another Tile.

However, during an inter-frame predictive coding process, on one hand, for a current frame, a pixel in any Tile of a reference frame may be used as the reference pixel. As shown in FIG. 2, an image includes 4 Tiles, which are a Tile 0, a Tile 1, a Tile 2, and a Tile 3. When a PU of an LCU in the Tile 2 is predicted, pixels in the Tile 1 and the Tile 2 may be used as reference pixels, and then an MV of a selected reference pixel is used for prediction. Therefore, if an error occurs in image data of the Tile 1 in the reference frame, after inter-frame predictive coding is performed, the error may be spread to the Tile 2, and a pixel in the Tile 2 may be used as a reference pixel for predicting a PU in another Tile. By analogy, the error occurring in the Tile 1 may be spread to the entire frame of image, thereby lowering accuracy of image coding.

On the other hand, when a PU is predicted, and when a reference pixel is determined, the most important is to determine a PMV (Predicted Moving Vector, predicted moving vector) of the PU. After the PMV of the PU is determined, an MV of the reference pixel may be predicted according to the determined PMV. Because each MV corresponds to one reference pixel, the reference pixel may be further determined. However, when inter-frame prediction is performed, when a candidate temporal moving vector is selected from the reference frame, as the PMV of the PU, a candidate temporal moving vector in another Tile may be used as the PMV of the to-be-predicted PU. For example, in FIG. 2, when a PU of an LCU in the Tile 2 is predicted, a candidate temporal moving vector in the Tile 3 may be used as the PMV of the PU included in the to-be-predictive-coded LCU. Therefore, if an error occurs in image data of the Tile 3 in the reference frame, after inter-frame predictive coding is performed, the error may be spread to the Tile 2, and a candidate temporal moving vector in the Tile 2 may be used as a PMV for predicting a PU in another Tile. By analogy, the error occurring in the Tile 3 may be spread to the entire frame of image, thereby lowering accuracy of image coding.

### SUMMARY

Embodiments of the present invention provide an image predictive coding method and an image encoder, to prevent an error occurring in image data of a Tile from spreading to an entire frame of image, thereby improving accuracy of image coding.

According to a first aspect, an image predictive coding method is provided, where the method includes:
determining, in a received current frame, a code block Tile of the current frame, in which a to-be-predictive-coded largest coding unit LCU is located;
determining, in a reference frame of the current frame, a Tile of the reference frame that corresponds to the Tile of the current frame, where a position of the Tile of the reference frame that corresponds to the Tile of the current frame, in the reference frame is the same as a position of the Tile of the current frame in the current frame;
selecting a reference pixel from the determined Tile of the reference frame, and predicting, according to the reference pixel, a predicting unit PU included in the LCU; and
performing predictive coding on the LCU according to a prediction result obtained by predicting the PU.

With reference to the first aspect, in a first possible implementation manner, the selecting a reference pixel from the determined Tile of the reference frame includes:
selecting the reference pixel from the determined Tile of the reference frame according to a position of the to-be-predictive-coded LCU in the Tile of the current frame, where a position of an LCU to which the selected reference pixel belongs in the Tile of the reference frame is the same as or adjacent to the position of the to-be-predictive-coded LCU in the Tile of the current frame.

According to a second aspect, an image predictive coding method is provided, where the method includes:
determining, in a received current frame, a code block Tile of the current frame, in which a to-be-predictive-coded largest coding unit LCU is located;
determining, in a reference frame of the current frame, a Tile of the reference frame that corresponds to the Tile of the current frame, where a position of the Tile of the reference frame that corresponds to the Tile of the current frame, in the reference frame is the same as a position of the Tile of the current frame in the current frame;
selecting a candidate temporal moving vector from the determined Tile of the reference frame, as a predicted moving vector PMV of a predicting unit PU included in the LCU;
obtaining through prediction a moving vector MV of the PU according to the PMV, and predicting the PU according to the MV obtained through prediction; and
performing predictive coding on the LCU according to a prediction result obtained by predicting the PU.

With reference to the second aspect, in a first possible implementation manner, after the determining, in a reference frame of the current frame, a Tile of the reference frame that corresponds to the Tile of the current frame, the method further includes:
selecting a candidate temporal moving vector from the reference frame of the current frame;
determining whether the selected candidate temporal moving vector is in the Tile of the reference frame that corresponds to the Tile of the current frame;
if the selected candidate temporal moving vector is in the Tile of the reference frame that corresponds to the Tile of the current frame, using the selected candidate temporal moving vector as the PMV of the PU included in the LCU; and
if the selected candidate temporal moving vector is not in the Tile of the reference frame that corresponds to the Tile of the current frame, returning to continuously perform the processing of selecting a candidate temporal moving vector from the reference frame of the current frame.

According to a third aspect, an image encoder is provided, where the image encoder includes a receiving unit configured to receive a to-be-encoded image, and further includes a determining unit, a predicting unit, and an encoding unit, where:
the determining unit is configured to acquire information about the received to-be-encoded image from the receiving unit, and determine, in a current frame, a code block Tile of the current frame, in which a to-be-predictive-coded largest coding unit LCU is located; and determine, in a reference frame of the current frame, a Tile of the reference frame that corresponds to the Tile of the current frame, where a position of the Tile of the reference frame that corresponds to the Tile of the current frame, in the reference frame is the same as a position of the Tile of the current frame in the current frame, and output position information of the determined Tile of the reference frame to the predicting unit;
the predicting unit is configured to acquire the position information of the Tile of the reference frame, which is determined by the determining unit, select a reference pixel from the determined Tile of the reference frame, predict, according to the reference pixel, a predicting unit PU included in the LCU, and output a prediction result to the encoding unit; and
the encoding unit is configured to acquire the prediction result that is output by the predicting unit and is obtained by predicting the PU, and perform predictive coding on the LCU according to the prediction result obtained by predicting the PU.

With reference to the third aspect, in a first possible implementation manner, the predicting unit is specifically configured to:
select the reference pixel from the determined Tile of the reference frame according to a position of the to-be-predictive-coded LCU in the Tile of the current frame, a position of an LCU to which the selected reference pixel belongs in the Tile of the reference frame is the same as or adjacent to the position of the to-be-predictive-coded LCU in the Tile of the current frame.

According to a fourth aspect, an image encoder is provided, where the image encoder includes a receiving unit configured to receive a to-be-encoded image, and further includes a determining unit, a predicting unit, and an encoding unit, where:
the determining unit is configured to acquire information about the received to-be-encoded image from the receiving unit, and determine, in a current frame, a code block Tile of the current frame, in which a to-be-predictive-coded largest coding unit LCU is located; and determine, in a reference frame of the current frame, a Tile of the reference frame that corresponds to the Tile of the current frame, where a position of the Tile of the reference frame that corresponds to the Tile of the current frame, in the reference frame is the same as a position of the Tile of the current frame in the current frame, and output position information of the determined Tile of the reference frame to the predicting unit;
the predicting unit is configured to acquire the position information of the Tile of the reference frame, which is determined by the determining unit, select a candidate temporal moving vector from the determined Tile of the reference frame, as a predicted moving vector PMV of a predicting unit PU included in the LCU, obtain through prediction a moving vector MV of the PU according to the PMV, predict the PU according to the MV obtained through prediction, and output a prediction result to the encoding unit; and
the encoding unit is configured to acquire the prediction result that is output by the predicting unit and is obtained by predicting the PU, and perform predictive coding on the LCU according to the prediction result obtained by predicting the PU.

With reference to the fourth aspect, in a first possible implementation manner, the predicting unit is specifically configured to:
select a candidate temporal moving vector from the reference frame of the current frame;
determine whether the selected candidate temporal moving vector is in the Tile of the reference frame that corresponds to the Tile of the current frame;
if the selected candidate temporal moving vector is in the Tile of the reference frame that corresponds to the Tile of the current frame, use the selected candidate temporal moving vector as the PMV of the PU included in the LCU; and
if the selected candidate temporal moving vector is not in the Tile of the reference frame that corresponds to the Tile of the current frame, return to continuously perform the processing of selecting a candidate temporal moving vector from the reference frame of the current frame.

According to the image predictive coding method provided in the first aspect and the image encoder provided in the third aspect, during a process of performing predictive coding on an LCU, in a reference frame of a current frame, a Tile of the reference frame that corresponds to a Tile of the current frame is determined, where the to-be-predictive-coded LCU is located in the Tile of the current frame, and a position of the Tile of the reference frame in the reference frame is the same as a position of the Tile of the current frame in the current frame; and a reference pixel is selected from the determined Tile of the reference frame. Therefore, when PU prediction is performed on the current to-be-predictive-coded LCU, a pixel in the Tile of the reference frame that corresponds to the position of the Tile of the current frame, in the reference frame is used as the reference pixel, and a pixel in another Tile of the reference frame is not used as the reference pixel. In this way, when an error occurs in another Tile of the reference frame, no error occurs in the Tile of the current frame, in which the current to-be-predictive-coded LCU is located. Similarly, when an error occurs in the Tile of the current frame, in which the current to-be-predictive-coded LCU is located, the error is only limited in the Tile of the current frame, and does not affect another Tile. Therefore, an error occurring in a Tile is prevented from spreading to an entire frame of image, thereby improving accuracy of image coding.

According to the image predictive coding method provided in the second aspect and the image encoder provided in the fourth aspect, during a process of performing PU predictive coding, in a reference frame of a current frame, a Tile of the reference frame that corresponds to a Tile of the current frame is determined, where a to-be-predictive-coded LCU is located in the Tile of the current frame and a position of the Tile of the reference frame in the reference frame is the same as a position of the Tile of the current frame in the current frame; and a candidate temporal moving vector is selected from the Tile of the reference frame, as a PMV of a PU included in the to-be-predictive-coded LCU. Therefore, when the PMV of the PU is determined, in the reference frame, a moving vector in the Tile of the reference frame that corresponds to the position of the Tile of the current frame is used, where the to-be-predictive-coded LCU is located in the Tile of the current frame, and a moving vector in another Tile of the reference frame is not used. In this way, when an error occurs in a Tile, the error is always limited in an area corresponding to the Tile, and does not affect encoding of another Tile. Therefore, the error is not spread to an entire frame of image, thereby improving accuracy of image coding.

### BRIEF DESCRIPTION OF DRAWINGS

FIG. 1 is a schematic diagram of dividing an image into Tiles in the prior art;
FIG. 2 is a schematic diagram of inter-frame predictive coding in the prior art;
FIG. 3 is a flowchart of an image predictive coding method according to Embodiment 1 of the present invention;
FIG. 4A is a schematic diagram of division of an image into tiles according to Embodiment 2 of the present invention;
FIG. 4B is a schematic diagram of inter-frame predictive coding according to Embodiment 2 of the present invention;
FIG. 5 is a flowchart of an image predictive coding method according to Embodiment 3 of the present invention;
FIG. 6 is a flowchart of implementation of selecting, from a Tile of a reference frame, a candidate temporal moving vector as a PMV of a PU according to Embodiment 4 of the present invention;
FIG. 7 is a schematic diagram of maintaining independence between Tiles according to an embodiment of the present invention; and
FIG. 8 is a schematic structural diagram of an image encoder according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

According to an image predictive coding method provided in the present invention, during a process of encoding an LCU in a Tile of a current frame, a Tile of the current frame is determined first in the received current frame, where the to-be-predictive-coded LCU is located in the Tile of the current frame. Then, in a reference frame of the current frame, a Tile of the reference frame is then determined, where a position of the Tile of the reference frame is the same as a position of the Tile of the current frame in the current frame. When a PU included in the LCU is predicted, a reference pixel is selected from the determined Tile of the reference frame; and when a PMV of the PU is determined, a candidate temporal moving vector is selected from the determined Tile of the reference frame, as the PMV of the PU. Therefore, a pixel in the Tile of the reference frame that corresponds to the Tile of the current frame is referenced and used as the reference pixel during the process of encoding the LCU, where the to-be-predictive-coded LCU is located in the Tile of the current frame, and a moving vector in the Tile of the reference frame that corresponds to the Tile of the current frame is referenced and used as the PMV of the PU, where the to-be-predictive-coded LCU is located in the Tile of the current frame. In this way, when an error occurs in a Tile of the reference frame, the error is always limited in an area corresponding to the Tile in which the error occurs. Therefore, the error occurring in the Tile is prevented from spreading to an entire frame of image, thereby effectively improving accuracy of image coding.

With reference to specific embodiments and the accompanying drawings, the following describes in detail the image predictive coding method provided in the present invention, which is certainly not limited thereto.

### Embodiment 1

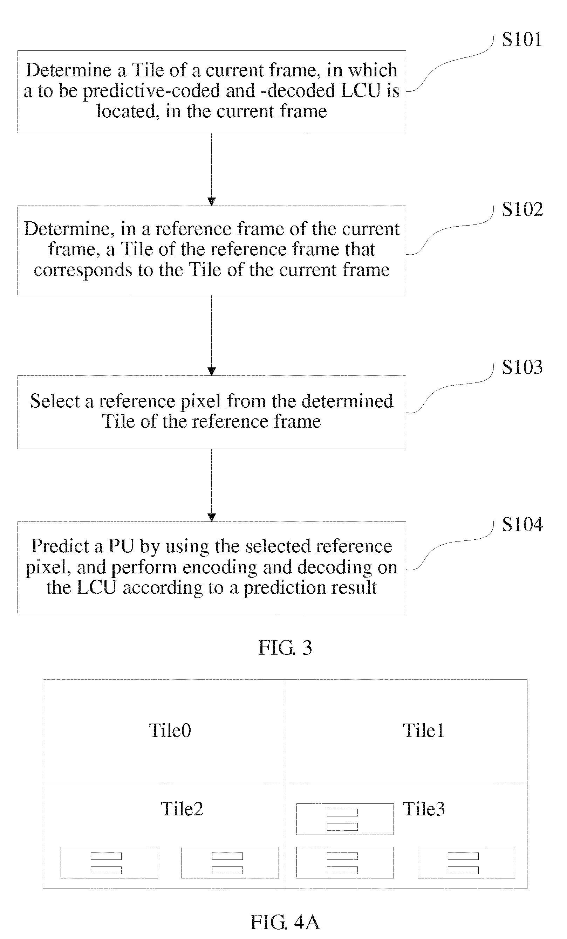

During an image predictive coding process, inter-frame predictive coding needs to be performed on an LCU in a Tile. During a process of performing inter-frame predictive coding on the LCU, the most important is to select a reference pixel of a PU in the to-be-predictive-coded LCU from a reference frame of a current frame. Then, the PU is predicted according to the selected reference pixel, and inter-frame predictive coding is performed on the LCU in the Tile according to a prediction result obtained by predicting the PU. As shown in FIG. 3, this embodiment of the present invention provides an image predictive coding method, including:

S101: Determine a Tile of a current frame, in which a to-be-predictive-coded LCU is located, in the current frame.

Specifically, an LCU is a basic coding unit defined in the HEVC/H.265. During an image predictive coding process, each LCU in each Tile needs to be encoded separately according to an order of Tiles, and multiple LCU obtained through encoding forms a Tile codestream for transmission.

In this embodiment of the present invention, when an LCU is encoded, a Tile of a current frame in the current frame is determined in advance, where the to-be-predictive-coded LCU is located in the Tile of the current frame. Therefore, in a reference frame of the current frame, a Tile of the reference frame corresponding to the current frame can be determined, where the to-be-predictive-coded LCU is located in the Tile of the current frame.

S102: Determine, in a reference frame of the current frame, a Tile of the reference frame that corresponds to the Tile of the current frame that is determined in S101.

Specifically, during a process of performing image coding by using a Tile technology, Tiles obtained by dividing each frame of image are fixed, and a position of each Tile obtained through division is also fixed. In this embodiment of the present invention, a position of the Tile of the reference frame, which is selected from the reference frame, in the reference frame, is the same as a position of the Tile of the current frame in the current frame.

The Tile technology is to use vertical and horizontal boundaries to divide each frame of image into some rows and columns, these rows and columns obtained through division form multiple rectangular areas, and each rectangular area is one Tile. During a Tile codestream transmission process, positions of these Tiles are fixed. Therefore, in this embodiment of the present invention, when the Tile of the reference frame that corresponds to the Tile of the current frame is determined in the reference frame of the current frame, a Tile is selected from the reference frame of the current frame, as an eventually needed Tile of the reference frame according to the position of the Tile of the current frame in the current frame, where a position of the Tile is the same as a position of the Tile of the current frame in the current frame.

Further, in this embodiment of the present invention, the Tiles obtained through division may be sequentially numbered. When the Tile of the reference frame that corresponds to the Tile of the current frame is determined in the reference frame of the current frame, a Tile may be selected from the reference frame of the current frame according to numbers of the Tiles, as the eventually needed Tile of the reference frame, where a position of the Tile is the same as the position of the Tile of the current frame in the current frame.

S103: Select a reference pixel from the Tile of the reference frame that is determined in S102.

Specifically, in this embodiment of the present invention, when a reference pixel of a PU is selected from the reference frame, the selection is performed in the Tile of the reference frame that is determined in S103, and is not performed in another Tile of the reference frame. Such selection ensures that the Tile of the current frame is related to the determined Tile of the reference frame, and is not related to another Tile of the reference frame. Therefore, independence is maintained between the Tile of the current frame and another Tile of the reference frame, to prevent an error occurring in a Tile of the reference frame from spreading to an entire frame of image, thereby effectively improving accuracy of image coding.

S104: Predict, by using the reference pixel selected in S103, a PU included in the LCU, and perform predictive coding on the to-be-predictive-coded LCU according to an obtained prediction result.

Specifically, each LCU is divided into several PUs during an encoding process. In this embodiment of the present invention, a reference pixel is selected from the Tile of the reference frame for each PU included in the LCU, each PU included in the LCU is separately predicted by using the selected reference pixel. Then, predictive coding is performed on the to-be-predictive-coded LCU according to the obtained prediction result, where the performing predictive coding on the to-be-predictive-coded LCU according to the prediction result obtained by predicting the PU mainly refers to that a prediction value of the PU may be obtained by predicting the PU, a difference operation is performed on the obtained prediction value and an original value of the PU, to obtain a residual of the PU; and predictive coding on the LCU can be completed by performing predictive coding on a residual of each PU.

In this embodiment of the present invention, when a reference pixel of a PU included in a to-be-predictive-coded LCU is selected, a Tile is determined in a reference frame of a current frame, as a Tile of the reference frame, where a position of the Tile is the same as a position of a Tile of the current frame in the current frame, where the to-be-predictive-coded LCU is located in the Tile of the current frame, and the reference pixel of the PU included in the to-be-predictive-coded LCU is selected from the determined Tile of the reference frame. Therefore, when the PU is predicted, a pixel in the Tile of the reference frame that corresponds to the Tile of the current frame, in the reference frame of the current frame is used as the reference pixel, and a pixel of another Tile of the reference frame is not used as the reference pixel. In this way, when an error occurs in another Tile of the reference frame, no error occurs in the Tile of the current frame, in which the current to-be-predictive-coded LCU is located. Similarly, when an error occurs in the Tile of the current frame, in which the current to-be-predictive-coded LCU is located, the error is only limited in the Tile of the current frame, and does not affect another Tile. Therefore, an error occurring in a Tile is prevented from spreading to an entire frame of image, thereby improving accuracy of image coding.

### Embodiment 2

With reference to an actual application, Embodiment 2 of the present invention describes in detail the image predictive coding method in Embodiment 1. As an exemplary embodiment of Embodiment 1, Embodiment 2 of the present invention describes in detail a process of selecting a reference pixel of a PU from the determined Tile of the reference frame in S103. Other steps are the same as those in Embodiment 1, and are not described herein again.

In this embodiment of the present invention, each image frame is divided into 4 Tiles, which are a Tile 0, a Tile 1, a Tile 2, and a Tile 3. Each Tile includes LCUs whose quantity is an integer, and each LCU is further divided into several PUs. As shown in FIG. 4A, when image predictive coding is performed, each PU in each LCU needs to be predicted separately, and then predictive coding is performed on each LCU in the Tile by using the PU obtained through prediction. In this embodiment of the present invention, description is made by using an example of performing predictive coding on an LCU 201 in the Tile 2.

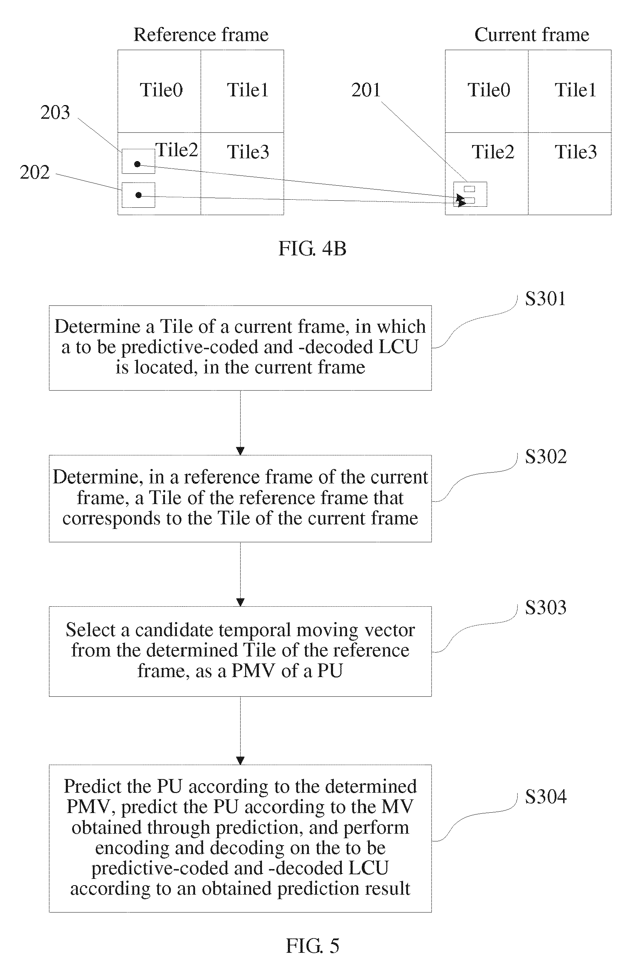

As shown in FIG. 4B, in this embodiment of the present invention, a Tile of a current frame is a Tile 2 of the current frame, where the to-be-predictive-coded LCU 201 is located in the Tile of the current frame. In the reference frame of the current frame, a Tile of a reference frame that corresponds to the Tile 2 of the current frame is a Tile 2 of the reference frame. When a reference pixel of a PU included in the LCU 201 is selected, a pixel is randomly selected from the Tile 2 of the reference frame, as the reference pixel of the PU.

Further, because a position of a Tile obtained by dividing each frame of image is fixed, a position of an LCU in each Tile is also fixed. In this embodiment of the present invention, when the reference pixel is selected, to improve accuracy of predictive coding, the reference pixel may be selected from the determined Tile of the reference frame according to a position of the to-be-predictive-coded LCU in the Tile of the current frame. Therefore, a position of an LCU to which the selected reference pixel belongs in the Tile of the reference frame is the same as or adjacent to the position of the to-be-predictive-coded LCU in the Tile of the current frame. For example, in FIG. 2, when the LCU 201 is encoded, a pixel in an LCU may be selected from the Tile 2 of the reference frame, as the reference pixel according to a position of the LCU 201 in the Tile 2 of the current frame, where a position of the LCU is the same as or adjacent to the position of the to-be-predictive-coded LCU 201. As shown in FIG. 4B, when the reference pixel of the PU included in the LCU 201 is selected, pixels in an LCU 202 and an LCU 203 may be selected as reference pixels, where a position of the LCU 202 in the Tile 2 of the reference frame is the same as the position of the LCU 201 in the Tile 2 of the current frame, and a position of the LCU 203 in the Tile 2 of the reference frame is adjacent to the position of the LCU 201 in the Tile 2 of the current frame.

In this embodiment of the present invention, when a reference pixel of a to-be-predictive-coded LCU is selected, a reference pixel of a PU is selected from a determined Tile of a reference frame, where a position of the determined Tile of the reference frame, in the reference frame of a current frame, is the same as a position of a Tile of the current frame in the current frame. Therefore, when PU prediction is performed on the current to-be-predictive-coded LCU, a pixel in the Tile of the reference frame that corresponds to the Tile of the current frame, in the reference frame, is used as the reference pixel, and a pixel in another Tile of the reference frame is not used as the reference pixel, which can prevent an error occurring in a Tile from spreading to an entire frame of image, thereby improving accuracy of image coding. Further, when the reference pixel is selected, the reference pixel is selected from the Tile of the reference frame according to an actual situation and according to the position of the Tile of the current frame, in which the to-be-predictive-coded LCU is located, which can further accurately obtain through prediction the to-be-predictive-coded LCU, and further improve accuracy of image coding.

### Embodiment 3

During an image predictive coding process, when a PU is predicted, some parameters, such as a PMV (Predicted Moving vector, predicted moving vector), further need to be selected from a reference frame of a current frame, an MV of the PU is predicted according to the selected PMV, the PU is predicted according to the MV obtained through prediction, and predictive coding is performed on a to-be-predictive-coded LCU in a Tile according to a prediction result. As shown in FIG. 5, Embodiment 3 of the present invention provides an image predictive coding method, including:
S301: Determine, in a received current frame, a Tile of a current frame, in which a to-be-predictive-coded LCU is located, in the current frame.

Specifically, in this embodiment of the present invention, the Tile of the current frame, in which the to-be-predictive-coded LCU is located, in the current frame, may be determined in the received current frame by using the method in Embodiment 1, which is not described herein again.
S302: Determine, in a reference frame of the current frame, a Tile of the reference frame that corresponds to the Tile of the current frame that is determined in S301.

In this embodiment of the present invention, a position of the Tile of the reference frame, which is determined in the reference frame of the current frame and corresponds to the Tile of the current frame, in the reference frame, is the same as a position of the Tile of the current frame in the current frame.
S303: Select a candidate temporal moving vector from the Tile of the reference frame that is determined in S302, as a PMV of a PU.

Specifically, in this embodiment of the present invention, when a candidate temporal moving vector is selected, the selection is performed in the Tile of the reference frame that is determined in S303, and is not performed in another Tile of the reference frame. Such selection ensures that the Tile of the current frame is related to the determined Tile of the reference frame, and is not related to another Tile in the reference frame, and maintains independence between the Tile of the current frame and another Tile of the reference frame except the Tile of the reference frame.
S304: Predict, according to the PMV determined in S303, an MV of the PU included in the LCU, predict the PU according to the MV obtained through prediction, and perform predictive coding on the to-be-predictive-coded LCU according to a prediction result obtained by predicting the PU.

Specifically, in this embodiment of the present invention, after the PMV of the PU is determined, an MV of the PU is obtained through prediction by using a difference between the determined PMV and a current vector, the PU is predicted according to the MV obtained through prediction, and predictive coding is performed on the to-be-predictive-coded LCU according to a prediction result obtained by predicting the PU.

In this embodiment of the present invention, when a PMV of a PU is determined, a Tile is determined in a reference frame of a current frame, as a Tile of the reference frame, where a position of the Tile is the same as a position of a Tile of the current frame in the current frame, where a to-be-predictive-coded LCU is located in the Tile of the current frame, and a candidate temporal moving vector is selected from the determined Tile of the reference frame, as the PMV of the PU. Therefore, when the PMV of the PU is determined, in the reference frame, the candidate temporal moving vector in the Tile of the reference frame that corresponds to the Tile of the current frame is used, where the to-be-predictive-coded LCU is located in the Tile of the current frame, and a candidate temporal moving vector in another Tile of the reference frame is not used. In this way, when an error occurs in a Tile, the error is always limited in an area corresponding to the Tile, and does not affect predictive coding of another Tile. Therefore, the error is not spread to an entire frame of image, thereby improving accuracy of image coding.

### Embodiment 4

With reference to an actual application, Embodiment 4 of the present invention describes in detail the image predictive coding method in Embodiment 3. As an exemplary embodiment of Embodiment 3, Embodiment 4 of the present invention describes in detail a process of selecting a candidate temporal moving vector from the determined Tile of the reference frame, as a PMV of a PU in S303. Other steps are the same as those in Embodiment 3, and are not described herein again.

Moving vectors used during an image coding process include a candidate spatial moving vector and a candidate temporal moving vector. When a candidate moving vector is selected to calculate the PMV, a candidate spatial moving vector may be selected from the current frame, as the PMV of the PU according to a candidate spatial moving vector of the current frame, or a candidate temporal moving vector may be selected from the reference frame, as the PMV of the PU.
A: Select a candidate spatial moving vector of the current frame, as the PMV of the PU included in the LCU.

The candidate spatial moving vector indicates a spatial position of the LCU in the Tile of the current frame. In this embodiment of the present invention, when the PMV is calculated, a candidate spatial moving vector of another LCU in the Tile of the current frame may be selected as the PMV, and a candidate spatial moving vector in another Tile is not used, thereby maintaining independence between Tiles.

Specifically, during an inter-frame predictive coding process, if a candidate spatial moving vector is selected to determine the PMV of the PU, and a candidate temporal moving vector is not selected to determine the PMV of the PU, independence between Tiles in different frames can be maintained.

For example, the HEVC/H.265 protocol specifies that a PPS has the following parameter: enable_temporal_mvp_flag. When encoding is performed, a value of the parameter is set to 0. During an entire encoding process, a candidate spatial moving vector instead of a candidate temporal moving vector is selected as the PMV of the PU.
B: Select a candidate temporal moving vector from the determined Tile of the reference frame, as the PMV of the PU included in the LCU.

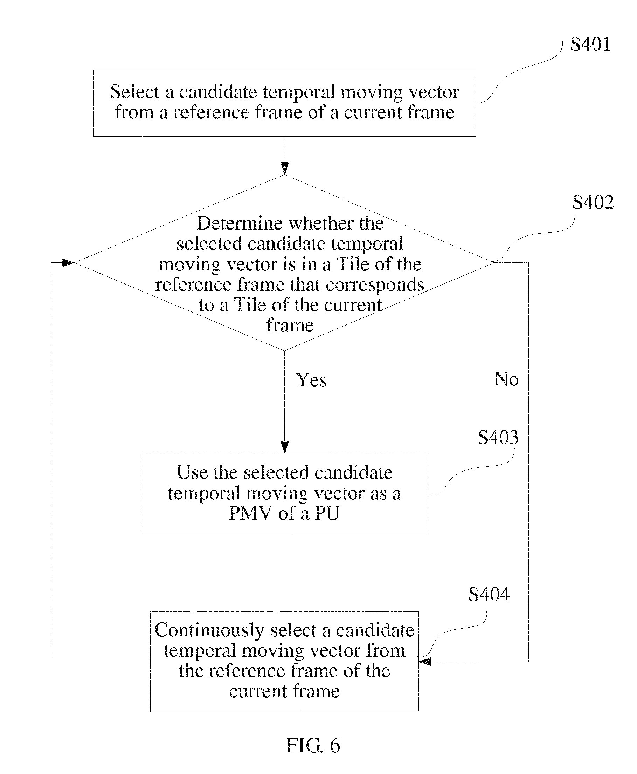

FIG. 6 shows an implementation process of selecting a candidate temporal moving vector from the determined Tile of the reference frame, as a PMV of a PU according to this embodiment of the present invention, including:
S401: Select a candidate temporal moving vector from the reference frame of the current frame.

Specifically, in this embodiment of the present invention, when a candidate temporal moving vector is selected, a candidate temporal moving vector may be randomly selected from the reference frame of the current frame. After the candidate temporal moving vector is selected, S402 is performed.
S402: Determine whether the candidate temporal moving vector selected in S401 is in the Tile of the reference frame that corresponds to the Tile of the current frame; if the selected candidate temporal moving vector is in the determined Tile of the reference frame, perform S403; and if the selected candidate temporal moving vector is not in the determined Tile of the reference frame, perform step S404.

Specifically, candidate temporal moving vectors of each PU in different Tiles are different. Whether the candidate temporal moving vector selected in S401 is in the Tile of the reference frame that corresponds to the Tile of the current frame may be determined according to the candidate temporal moving vector in the Tile of the reference frame that corresponds to the Tile of the current frame, in the reference frame, where the to-be-predictive-coded PU is located in the Tile of the current frame.
S403: Use the candidate temporal moving vector selected in S401, as the PMV of the PU included in the to-be-predictive-coded LCU.

Specifically, after determining is performed in S402, it is known that the selected candidate temporal moving vector is in the determined Tile of the reference frame that corresponds to the Tile of the current frame, where the to-be-predictive-coded LCU is located in the Tile of the current frame, and the candidate temporal moving vector selected in the S401 may be used as the PMV of the PU.
S404: Continuously select a candidate temporal moving vector from the reference frame of the current frame, go back to S402, and repeat the foregoing steps until the selected candidate temporal moving vector is in the Tile of the reference frame that corresponds to the Tile of the current frame, in the current frame, where the to-be-predictive-coded LCU is located in the Tile of the current frame.

In this embodiment of the present invention, when a PMV of a PU is determined, a candidate temporal moving vector is selected from a Tile of a reference frame that corresponds to a Tile of a current frame, as the PMV of the PU, where a to-be-predictive-coded LCU is located in the Tile of the current frame, in the current frame. Therefore, when inter-frame prediction is performed on an MV of the PU by using the PMV, only a candidate temporal moving vector in the Tile of the reference frame is selected, where a position of the Tile of the reference frame in the reference frame is the same as a position of the Tile of the current frame, and a candidate temporal moving vector in another Tile of the reference frame is not selected, thereby maintaining independence between Tiles in different frames when inter-frame predictive coding is performed.

### Embodiment 5

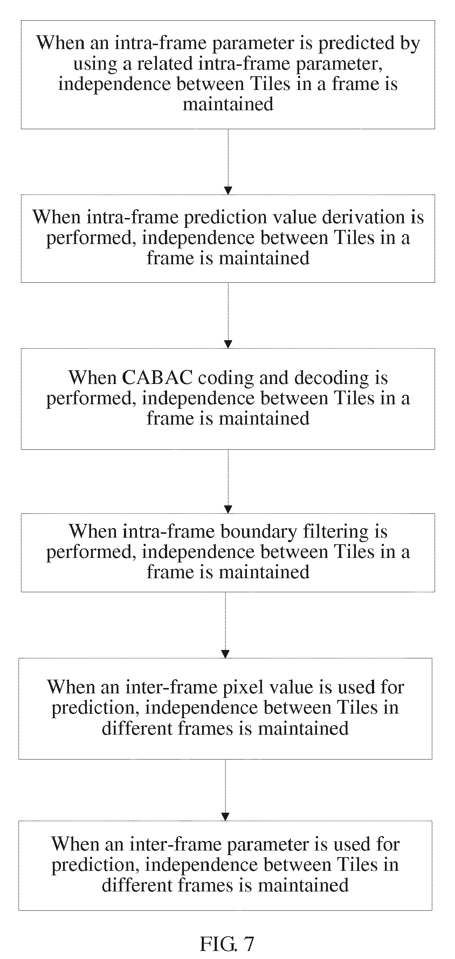

With reference to Embodiment 1 to Embodiment 4 of the present invention, as shown in FIG. 7, Embodiment 5 of the present invention provides an implementation method of maintaining independence between Tiles during an intra-frame predictive coding process and an inter-frame predictive coding process.
(1) When an intra-frame parameter is predicted by using a related intra-frame parameter, independence between Tiles in a frame is maintained.
   Specifically, the intra-frame parameter includes derivation of a PMV, intra-frame prediction mode derivation, QP (Quantization Parameter, quantization parameter) derivation, and the like. Specifically, when a candidate spatial moving vector is used to derive the PMV, a cross-Tile candidate spatial moving vectors at adjacent positions are not referenced, to maintain independence between Tiles. Similarly, when intra-frame prediction mode derivation is performed, a cross-Tile luminance prediction mode is not referenced either, to maintain independence between Tiles. When QP derivation is performed, a cross-Tile QP in a QP quantization group cannot be referenced, and a value of a QP of another Tile cannot be assigned to the QP, to maintain independence between Tiles.
(2) When intra-frame prediction value derivation is performed, independence between Tiles in a frame is maintained.
   Specifically, when intra-frame prediction value derivation is performed, a cross-Tile sample point cannot be referenced, to maintain independence between Tiles in a frame.
(3) When CABAC (Context Adaptive Binary Arithmetic Coder, context adaptive binary arithmetic coder) coding is performed, independence between Tiles in a frame is maintained.
   Specifically, each Tile uses an independent CABAC probability model, to maintain independence between Tiles in the frame.
(4) When intra-frame boundary filtering is performed, independence between Tiles in a frame is maintained.
   Specifically, a syntactic element loop_filter_across_tiles_enabled_flag is set to 0, a pixel at a boundary of a Tile is controlled, and a pixel of an adjacent Tile is not used for filtering, to implement independence between Tiles in a frame.
(5) When an inter-frame pixel value is used for prediction, independence between Tiles in different frames is maintained.
   Specifically, during a process of performing predictive coding on an LCU, when a PU is predicted, a pixel in a Tile of a reference frame that corresponds to a position of a Tile of a current frame, in the reference frame is selected as a reference pixel for prediction, to maintain independence between Tiles in different frames.
(6) When an inter-frame parameter is used for prediction, independence between Tiles in different frames is maintained.
   Specifically, when a PMV of a PU is determined between frames, in a reference frame of a current frame, a candidate temporal moving vector in a Tile of the reference frame is used as the PMV of the PU, to maintain independence between Tiles in different frames, where a position of the Tile of the reference frame is the same as a to-be-predictive-coded Tile of the current frame.

According to this embodiment of the present invention, not only intra-frame independence but also inter-frame independence can be maintained between Tiles in an image obtained through predictive coding. When an error occurs in a Tile, the error occurring in the Tile is limited in an area corresponding to the Tile no matter intra-frame predictive coding is performed in a current frame obtained through encoding or inter-frame predictive coding is performed by using a current frame obtained through encoding as a reference frame, and does not spread to an entire frame of image, thereby improving accuracy of image coding well.

### Embodiment 6

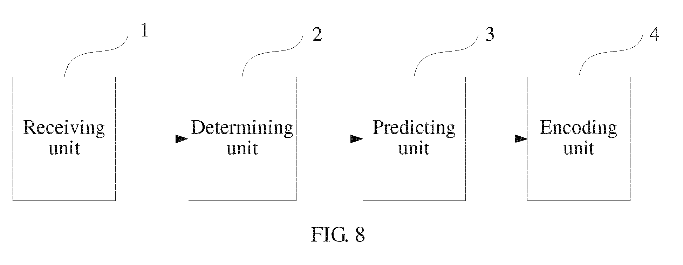

Based on the image coding methods provided in Embodiment 1 and Embodiment 2 of the present invention, as shown in FIG. 8, this embodiment of the present invention provides an image encoder, where the encoder includes a receiving unit 1 configured to receive a to-be-encoded image, and further includes a determining unit 2, a predicting unit 3, and an encoding unit 4, where:
the determining unit 2 is configured to acquire information about the received to-be-encoded image from the receiving unit 1, and determine, in a current frame, a code block Tile of the current frame, in which a to-be-predictive-coded largest coding unit LCU is located; and determine, in a reference frame of the current frame, a Tile of the reference frame that corresponds to the Tile of the current frame, where a position of the Tile of the reference frame that corresponds to the Tile of the current frame, in the reference frame, is the same as a position of the Tile of the current frame in the current frame, and output position information of the determined Tile of the reference frame to the predicting unit 3;
the predicting unit 3 is configured to acquire the position information of the Tile of the reference frame, which is determined by the determining unit 2, select a reference pixel from the determined Tile of the reference frame, predict, according to the reference pixel, a predicting unit PU included in the LCU, and output a prediction result to the encoding unit 4; and
the encoding unit 4 is configured to acquire the prediction result that is output by the predicting unit 3 and is obtained by predicting the PU, and perform predictive coding on the LCU according to the prediction result obtained by predicting the PU.

The predicting unit 3 is specifically configured to:
select the reference pixel from the determined Tile of the reference frame according to a position of the to-be-predictive-coded LCU in the Tile of the current frame, where a position of an LCU to which the selected reference pixel belongs in the Tile of the reference frame is the same as or adjacent to the position of the to-be-predictive-coded LCU in the Tile of the current frame.

In this embodiment of the present invention, when a reference pixel of a to-be-predictive-coded LCU is selected, a reference pixel of a PU is selected from a determined Tile of a reference frame, where a position of the determined Tile of the reference frame, in the reference frame of a current frame, is the same as a position of a Tile of the current frame in the current frame. Therefore, when PU prediction is performed on the current to-be-predictive-coded LCU, a pixel in the Tile of the reference frame that corresponds to the Tile of the current frame, in the reference frame, is used as the reference pixel, and a pixel in another Tile of the reference frame is not used as the reference pixel, which can prevent an error occurring in a Tile from spreading to an entire frame of image, thereby improving accuracy of image coding. Further, when the reference pixel is selected, the reference pixel is selected from the Tile of the reference frame according to an actual situation and according to the position of the Tile of the current frame, in which the to-be-predictive-coded LCU is located, which can further accurately obtain through prediction the to-be-predictive-coded LCU, and further improve accuracy of image coding.

### Embodiment 7

Based on the image predictive coding and decoding methods involved in Embodiment 3 and Embodiment 4, this embodiment of the present invention provides an image encoder, where the encoder includes a receiving unit 1 configured to receive a to-be-encoded image, and further includes a determining unit 2, a predicting unit 3, and an encoding unit 4, where:
the determining unit 2 is configured to acquire information about the received to-be-encoded image from the receiving unit 1, and determine, in a current frame, a code block Tile of the current frame, in which a to-be-predictive-coded largest coding unit LCU is located; and determine, in a reference frame of the current frame, a Tile of the reference frame that corresponds to the Tile of the current frame, where a position of the Tile of the reference frame that corresponds to the Tile of the current frame, in the reference frame, is the same as a position of the Tile of the current frame in the current frame, and output position information of the determined Tile of reference frame to the predicting unit 3;
the predicting unit 3 is configured to acquire the position information of the Tile of the reference frame, which is determined by the determining unit 2, select a candidate temporal moving vector from the determined Tile of the reference frame, as a predicted moving vector PMV of a predicting unit PU included in the LCU, obtain through prediction a moving vector MV of the PU according to the PMV, predict the PU according to the MV obtained through prediction, and output a prediction result to the encoding unit 4; and
the encoding unit 4 is configured to acquire the prediction result that is output by the predicting unit 3 and is obtained by predicting the PU, and perform predictive coding on the LCU according to the prediction result obtained by predicting the PU.

The predicting unit 3 is specifically configured to:
select a candidate temporal moving vector from the reference frame of the current frame;
determine whether the selected candidate temporal moving vector is in the Tile of the reference frame that corresponds to the Tile of the current frame;
if the selected candidate temporal moving vector is in the Tile of the reference frame that corresponds to the Tile of the current frame, use the selected candidate temporal moving vector as the PMV of the PU included in the LCU; and
if the selected candidate temporal moving vector is not in the Tile of the reference frame that corresponds to the Tile of the current frame, return to continuously perform the processing of selecting a candidate temporal moving vector from the reference frame of the current frame.

In this embodiment of the present invention, when a PMV of a PU is determined, a Tile is determined in a reference frame of a current frame, as a Tile of the reference frame, where a position of the Tile is the same as a position of a Tile of the current frame in the current frame, where a to-be-predictive-coded LCU is located in the Tile of the current frame, and a candidate temporal moving vector is selected from the determined Tile of the reference frame, as the PMV of the PU. Therefore, when the PMV of the PU is determined, the candidate temporal moving vector in the Tile of the reference frame that corresponds to the Tile of the current frame, in which the to-be-predictive-coded LCU is located, in the reference frame is used, and a candidate temporal moving vector in another Tile of the reference frame is not used. In this way, when an error occurs in a Tile, the error is always limited in an area corresponding to the Tile, and does not affect predictive coding of another Tile. Therefore, the error is not spread to an entire frame of image, thereby improving accuracy of image coding.

Apparently, a person skilled in the art can make various modifications and variations to the present invention without departing from the spirit and scope of the present invention. In this way, the present invention is intended to cover these modifications and variations provided that these modifications and variations to the present invention fall within the scope of the claims of the present invention and their equivalent technologies.

## Claims

1. An image predictive coding method, wherein the method comprises:
determining, in a received current frame, a code block Tile of the current frame, in which a to-be-predictive-coded largest coding unit LCU is located;
determining, in a reference frame of the current frame, a Tile corresponding to the Tile of the current frame, wherein a position of the Tile of the reference frame in the reference frame is the same as a position of the Tile of the current frame in the current frame;
selecting a reference pixel from the determined Tile of the reference frame, and predicting, according to the reference pixel, a predicting unit PU comprised in the LCU; and
performing predictive coding on the LCU according to a prediction result obtained by predicting the PU.

2. The method according to claim 1, wherein the selecting a reference pixel from the determined Tile of the reference frame comprises:
selecting the reference pixel from the determined Tile of the reference frame according to a position of the to-be-predictive-coded LCU in the Tile of the current frame, wherein a position of an LCU to which the selected reference pixel belongs in the Tile of the reference frame is the same as or adjacent to the position of the to-be-predictive-coded LCU in the Tile of the current frame.

3. An image predictive coding method, wherein the method comprises:
determining, in a received current frame, a code block Tile of the current frame, in which a to-be-predictive-coded largest coding unit LCU is located;
determining, in a reference frame of the current frame, a Tile of the reference frame that corresponds to the Tile of the current frame, wherein a position of the Tile of the reference frame in the reference frame is the same as a position of the Tile of the current frame in the current frame;
selecting a candidate temporal moving vector from the determined Tile of the reference frame, as a predicted moving vector PMV of a predicting unit PU comprised in the LCU;
obtaining through prediction a moving vector MV of the PU according to the PMV, and predicting the PU according to the MV obtained through prediction; and
performing predictive coding on the LCU according to a prediction result obtained by predicting the PU.

4. The method according to claim 3, wherein after the determining, in a reference frame of the current frame, a Tile of the reference frame that corresponds to the Tile of the current frame, the method comprises:
selecting a candidate temporal moving vector from the reference frame of the current frame;
determining whether the selected candidate temporal moving vector is in the Tile of the reference frame that corresponds to the Tile of the current frame;
if the selected candidate temporal moving vector is in the Tile of the reference frame that corresponds to the Tile of the current frame, using the selected candidate temporal moving vector as the PMV of the PU comprised in the LCU; and
if the selected candidate temporal moving vector is not in the Tile of the reference frame that corresponds to the Tile of the current frame, returning to continuously perform the processing of selecting a candidate temporal moving vector from the reference frame of the current frame.

5. An image encoder, comprising a receiving unit configured to receive a to-be-encoded image, and further comprising a determining unit, a predicting unit, and an encoding unit, wherein:
the determining unit is configured to acquire information about the received to-be-encoded image from the receiving unit, and determine, in a current frame, a code block Tile of the current frame, in which a to-be-predictive-coded largest coding unit LCU is located; and determine, in a reference frame of the current frame, a Tile of the reference frame that corresponds to the Tile of the current frame, wherein a position of the Tile of the reference frame that corresponds to the Tile of the current frame, in the reference frame is the same as a position of the Tile of the current frame in the current frame, and output position information of the determined Tile of the reference frame to the predicting unit;
the predicting unit is configured to acquire the position information of the Tile of the reference frame, which is determined by the determining unit, select a reference pixel from the determined Tile of the reference frame, predict, according to the reference pixel, a predicting unit PU comprised in the LCU, and output a prediction result to the encoding unit; and
the encoding unit is configured to acquire the prediction result that is output by the predicting unit and is obtained by predicting the PU, and perform predictive coding on the LCU according to the prediction result obtained by predicting the PU.

6. The image encoder according to claim 5, wherein the predicting unit is specifically configured to:
select the reference pixel from the determined Tile of the reference frame according to a position of the to-be-predictive-coded LCU in the Tile of the current frame, wherein a position of an LCU to which the selected reference pixel belongs in the Tile of the reference frame is the same as or adjacent to the position of the to-be-predictive-coded LCU in the Tile of the current frame.

7. An image encoder, comprising a receiving unit configured to receive a to-be-encoded image, and further comprising a determining unit, a predicting unit, and an encoding unit, wherein:
the determining unit is configured to acquire information about the received to-be-encoded image from the receiving unit, and determine, in a current frame, a code block Tile of the current frame, in which a to-be-predictive-coded largest coding unit LCU is located; and determine, in a reference frame of the current frame, a Tile of the reference frame that corresponds to the Tile of the current frame, wherein a position of the Tile of the reference frame that corresponds to the Tile of the current frame, in the reference frame is the same as a position of the Tile of the current frame in the current frame, and output position information of the determined Tile of the reference frame to the predicting unit;
the predicting unit is configured to acquire the position information of the Tile of the reference frame, which is determined by the determining unit, select a candidate temporal moving vector from the determined Tile of the reference frame, as a predicted moving vector PMV of a predicting unit PU comprised in the LCU, obtain through prediction a moving vector MV of the PU according to the PMV, predict the PU according to the MV obtained through prediction, and output a prediction result to the encoding unit; and
the encoding unit is configured to acquire the prediction result that is output by the predicting unit and is obtained by predicting the PU, and perform predictive coding on the LCU according to the prediction result obtained by predicting the PU.

8. The image encoder according to claim 7, wherein the predicting unit is specifically configured to:
select a candidate temporal moving vector from the reference frame of the current frame;
determine whether the selected candidate temporal moving vector is in the Tile of the reference frame that corresponds to the Tile of the current frame;
if the selected candidate temporal moving vector is in the Tile of the reference frame that corresponds to the Tile of the current frame, use the selected candidate temporal moving vector as the PMV of the PU comprised in the LCU; and
if the selected candidate temporal moving vector is not in the Tile of the reference frame that corresponds to the Tile of the current frame, return to continuously perform the processing of selecting a candidate temporal moving vector from the reference frame of the current frame.
